# EUROPEAN PATENT APPLICATION

(11) **EP 3 492 177 A1**
(43) Date of publication of application: **05.06.2019**
(21) Application number: 17204382.0
(22) Date of filing: 29.11.2017
(51) Int. Cl.: B04B 11/04, G01N 35/04, B65G 54/02, B04B 5/04

(54) **LABORATORY CENTRIFUGE SYSTEM**

(71) Applicant: Roche Diagnostics GmbH, 68305 Mannheim (DE); F. Hoffmann-La Roche AG, 4070 Basel (CH)
(72) Inventor: Harbers, Rik, Cambridge, MA 02139 (US); Vollenweider, Urs, 8820 Waedenswil (CH)
(74) Representative: Patentanwälte Ruff, Wilhelm, Beier, Dauster & Partner mbB

(57) **Abstract**

Laboratory centrifuge system (10), comprising:
- a laboratory centrifuge (20), wherein the laboratory centrifuge (20) comprises at least one rotation reception (21), wherein the rotation reception (21) is adapted to support at least one sample container carrier (70) carrying at least one laboratory sample container (80) containing a laboratory sample (90) and to rotate for centrifuging the laboratory sample (90),
- a transportation track (30), wherein the transportation track (30) is adapted to support the sample container carrier (70), and
- a transfer mechanism (40), wherein the transfer mechanism (40) is adapted to transfer the sample container carrier (70) from the transportation track (30) to the rotation reception (21) and/or from the rotation reception (21) to the transportation track (30),
- wherein the transportation track (30) and/or the rotation reception (21) are/is adapted to be arranged in a transfer position (TP) to support the sample container carrier (70) during the whole transfer by the transfer mechanism (40).

## Description

### TECHNICAL FIELD AND PRIOR ART

The invention relates to a laboratory centrifuge system.

EP 3 085 453 A1 discloses a laboratory automation system. The laboratory automation system comprises a centrifuge, a transport plane and a centrifuge loading device. On the transport plane is a sample container carrier carrying a sample container containing a sample. The centrifuge loading device is adapted to load the sample container into the centrifuge.

### SUMMARY OF THE INVENTION

It is the object of the invention to provide a laboratory centrifuge system comprising a laboratory centrifuge, wherein the laboratory centrifuge system enables a transfer of a laboratory sample container to and/or from the centrifuge in an improved manner, in particular in a time-saving manner.

This object is solved by a laboratory centrifuge system according to claim 1. Preferred embodiments are defined in the dependent claims.

The invention relates a laboratory centrifuge system. The laboratory centrifuge system comprises a laboratory centrifuge, a transportation track and a transfer mechanism. The laboratory centrifuge comprises at least one rotation reception. The rotation reception is adapted to support at least one sample container carrier carrying at least one laboratory sample container containing a laboratory sample. Furthermore, the rotation reception is adapted to rotate, in particular to automatically rotate, for centrifuging the laboratory sample. The transportation track is adapted to support the sample container carrier. The transfer mechanism is adapted to transfer, in particular to automatically transfer, the sample container carrier from the transportation track to, in particular onto, the rotation reception and/or from the rotation reception to, in particular onto, the transportation track. The transportation track and/or the rotation reception are/is adapted to be arranged, in particular to be automatically arranged, in a transfer position to support the sample container carrier during the whole transfer by the transfer mechanism.

This enables a time-saving transfer of the sample container carrier. In particular the sample container carrier does not have to be lifted off the transportation track and/or the rotation reception for the transfer, which may take time. Typically a transfer by a gripper is time-consuming, since safely gripping the sample container carrier and lifting it for the transfer is necessary. However, here the transfer mechanism does not have to be or to comprise a gripper.

To support the sample container carrier during the whole transfer may mean that the sample container carrier does not have to or may not be removed by the transfer mechanism from the transportation track and the rotation reception at once. During the whole transfer the sample container carrier is supported either by the transportation track or the rotation reception or both of them. To support may also be denoted as to carry.

In the transfer position the transportation track and the rotation reception may be proximal or adjacently or directly next arranged to each other. In other words: in the transfer position the transportation track and the rotation reception may be arranged laterally or side by side, in particular on a common horizontal level. In the transfer position a distance in between the transportation track and the rotation reception may be maximal 2 centimeter (cm), in particular maximal 1 cm, in particular maximal 0,1 cm, in particular 0 cm. In particular in the transfer position the transportation track and the rotation reception may be in direct contact or touch each other. The transfer may only be allowed or possible in the transfer position.

The transportation track and the transfer mechanism may be embodied different from each other. Furthermore, the rotation reception and the transfer mechanism may be embodied different from each other. Moreover, the transportation track and the rotation reception may be embodied different from each other.

Additionally the laboratory centrifuge system may comprise a control device. In particular the control device may comprise or be an integrated circuit, a tablet computer, a smartphone or a computer. The control device may be configured to control the rotation reception, the transportation track and/or the transfer mechanism, in particular for the transfer.

The laboratory sample container may be designed as a tube and/or may have an opening at an upper and/or a top end. Furthermore, the laboratory sample container may be made of glass or transparent plastic. The laboratory sample may be a blood sample, a urine sample or a chemical sample. The laboratory sample container and its opening, respectively, may be closed by a cap or a closure, respectively. The cap may comprise rubber and/or plastic or may completely consist of rubber and/or plastic. The cap may be embodied as a lid, in particular as a rigid lid, or as a foil, in particular a flexible foil. Moreover, the laboratory sample container and the sample container carrier may be embodied either as separate pieces or as one-piece.

According to an embodiment of the invention the transportation track and/or the rotation reception are/is adapted to be arranged, in particular to be automatically arranged, between the transfer position and a rotation position. In the transfer position the transportation track and the rotation reception are proximal arranged to each other. In the rotation position the transportation track and the rotation reception are distal or distantly, respectively, arranged to each other. In particular the rotation position may be different from the transfer position. In the rotation position a gap may be present in between the transportation track and the rotation reception. In other words: in the rotation position a distance in between the transportation track and the rotation reception may be minimal 1 centimeter (cm), in particular minimal 2 cm, in particular minimal 5 cm. The transfer may not or does not have to be allowed or possible in the rotation position.

According to an embodiment of the invention in the rotation position the rotation reception is adapted to swing outwards, in particular during the rotation. The distal rotation position allows the rotation reception to swing outwards, in particular to avoid a collision between the transportation track and the outwards swinging rotation reception during the rotation. The laboratory centrifuge may be denoted as swinging head centrifuge.

According to an embodiment of the invention the laboratory centrifuge comprises a rotor. The rotor is adapted to rotate, in particular to automatically rotate, the rotation reception. The rotation reception is, in particular mechanically, attached to the rotor by a hinge. This enables the rotation reception to swing outwards. The control device, if present, may be configured to control the rotor.

According to an embodiment of the invention the laboratory centrifuge system comprises a vertical mover. The vertical mover is adapted to vertically move, in particular to automatically move, the rotation reception and/or the transportation track between the transfer position and the rotation position. In particular the transfer position and the rotation reception may be different vertical positions. Additionally or alternatively the laboratory centrifuge system comprises a horizontal mover. The horizontal mover is adapted to horizontally move, in particular to automatically move, the transportation track and/or the rotation reception between the transfer position and the rotation position. In particular the transfer position and the rotation reception may be different horizontal positions. The vertical mover and/or the horizontal mover may be, in particular mechanically, attached to the rotation reception and/or the transportation track. Furthermore, the vertical mover may be a vertical conveyor, a lift and/or an elevator. The horizontal mover may be a horizontal conveyor. The control device, if present, may be configured to control the vertical mover and/or the horizontal mover, in particular for the movement.

According to an embodiment of the invention the laboratory centrifuge system comprises a housing and a housing mover. The housing is adapted to house the rotation reception, in particular in the rotation position. The housing mover is adapted to move, in particular to automatically move, at least a part, in particular all, of the housing between a closed position and an open position. In the closed position the part is arranged in between the transportation track and the rotation reception. In the open position the part is removed from in between the transportation track and the rotation reception. This enables to protect an environment, in particular the transportation track, against problems as contamination, in particular caused by the laboratory sample, which in particular may occur during the rotation of the rotation reception. The housing may be denoted as protective housing. Furthermore, this enables access to the rotation reception. The part may also be denoted as access door. In particular the access door may close, in particular in the closed position, or open, in particular in the open position, an access or transfer, respectively, opening in the housing. The housing mover may be a vertical housing mover and/or a horizontal housing mover. The closed position and the open position may be different horizontal and/or vertical positions. In the closed position the transportation track and/or the rotation reception may be in the rotation position. In the open position the transportation track and/or the rotation reception may be in the transfer position. The control device, if present, may be configured to control the housing mover, in particular for the movement.

According to an embodiment of the invention the rotation reception has a rotation axis. The transfer mechanism is adapted to transfer the sample container carrier in a direction being not parallel to the rotation axis, in particular being perpendicular to the rotation axis. This enables to transfer the sample container carrier laterally.

According to an embodiment of the invention the transportation track extends in at least one dimension, such that the sample container carrier can move, in particular translationally move, on the transportation track towards and/or away from the rotation reception. This enables a continuous transportation or transfer, respectively, of the sample container carrier to and/or from the rotation reception. A length of the transportation track may be larger than a diameter or footprint, respectively, of the sample container carrier, in particular on the transportation track. In other words: a length of the transportation track may be minimal 3 cm, in particular minimal 5 cm, in particular minimal 10 cm, in particular minimal 20 cm, in particular minimal 50 cm. The transportation track may also be denoted track or lane. Additionally or alternatively the transportation track, and in particular the transfer mechanism, may be embodied as a conveyor, a belt and/or a band.

According to an embodiment of the invention the transportation track is embodied as a plane. In particular the plane may be embodied, such that the sample container carrier can stand on the plane. The plane may also be denoted as surface. The sample container carrier may be translationally moved in two dimensions on the plane. Furthermore, the sample container carrier may slide over the plane. Moreover, the sample container carrier may move on the plane along an individual transport path. In particular the transportation track may be a closed plane.

According to an embodiment of the invention the rotation reception is embodied as a tray. In particular the tray may be embodied, such that the sample container carrier can stand on the tray. The tray may be denoted as plate or surface. The sample container carrier may be translationally moved in at least one dimension on the tray. Furthermore, the sample container carrier may slide over the tray. In particular the rotation reception may be a closed tray.

According to an embodiment of the invention the transfer mechanism comprises a pusher. The pusher is adapted to push, in particular to automatically push, the sample container carrier from the transportation track to the rotation reception and/or from the rotation reception to the transportation track. In particular the pusher may be adapted to be in direct contact with the sample container carrier. In other words: the pusher may be adapted for a form fit connection with the sample container carrier. In particular the pusher may be adapted to push at a lateral or peripheral, respectively, side of the sample container carrier. The control device, if present, may be configured to control the pusher, in particular for the transfer.

According to an embodiment of the invention the transfer mechanism comprises a number of electro-magnetic actuators. The number of electro-magnetic actuators is adapted to apply, in particular to automatically apply, a magnetic move force to the sample container carrier to move, in particular to automatically move, the sample container carrier from the transportation track to the rotation reception and/or from the rotation reception to the transportation track. This enables to move the sample container carrier contactless. The number of electro-magnetic actuators may be, in particular stationary, arranged below the transportation track and/or the rotation reception at least in the transfer position. If arranged below the rotation reception, this may enable to hold the sample container carrier during the rotation. The number of electro-magnetic actuators may be adapted to generate a magnetic field. In particular the number of electro-magnetic actuators may be a number of solenoids surrounding a number of ferromagnetic cores. Furthermore, the number of electro-magnetic actuators may be driven or energized individually in order to generate or to provide the magnetic field. Moreover, the number of electro-magnetic actuators may be arranged in two dimensions, in particular in a grid having rows and columns. Further, the number of electro-magnetic actuators may be arranged in a plane parallel to the transportation track and/or the rotation reception. The control device, if present, may be configured to control the number of electro-magnetic actuators, in particular for the transfer.

According to an embodiment of the invention the laboratory centrifuge system comprises the sample container carrier. In particular the sample container carrier may be embodied as described above, in particular be adapted to carry the laboratory sample container.

According to an embodiment of the invention the transfer mechanism comprises at least one magnetically active element. The at least one magnetically active element is comprised by the sample container carrier. In particular the magnetically active element may be a permanent magnet or an electro-magnet. Additionally or alternatively the magnetically active element may comprise a magnetically soft material. The magnetically active element may be adapted to interact with the magnetic field generated by the number of electro-magnetic actuators, such that the magnetic move force may be applied to the sample container carrier.

According to an embodiment of the invention the transfer mechanism comprises at least one wheel and a drive motor to drive the wheel. The drive motor and the wheel are adapted to move, in particular to automatically move, the sample container carrier from the transportation track to the rotation reception and/or from the rotation reception to the transportation track. In particular the sample container carrier may comprise the drive motor and the wheel. The drive motor may be adapted to drive the wheel. Furthermore, the drive motor may be an electric motor. The control device, if present, may be configured to control the drive motor and the wheel.

The laboratory centrifuge system may also be denoted as laboratory automation system. In addition to the laboratory centrifuge the laboratory automation system may comprise a number of laboratory stations. The number of laboratory stations may comprise pre-analytical, analytical and/or post-analytical laboratory stations. Pre-analytical laboratory stations may be adapted to perform any kind of pre-processing of the laboratory sample, the laboratory sample container and/or the sample container carrier. Analytical laboratory stations may be adapted to use the laboratory sample or a part of the laboratory sample and a reagent to generate a measuring signal, the measuring signal indicating if and in which concentration, if any, an analyte is existing. Post-analytical laboratory stations may be adapted to perform any kind of post-processing of the laboratory sample, the laboratory sample container and/or the sample container carrier. The pre-analytical, analytical and/or post-analytical laboratory stations may comprise at least one of a decapping station, a recapping station, an aliquot station, an archiving station, a pipetting station, a sorting station, a tube type identification station, a sample quality determining station, an add-on buffer station, a liquid level detection station, a sealing/desealing station, a pushing station, a belt station, a conveying system station and/or a gripper station for moving the sample container to or from the sample container carrier. The laboratory centrifuge may be also denoted as laboratory station. The transfer mechanism may be adapted to move or to distribute the sample container carrier and/or the laboratory sample container and/or the laboratory sample between the laboratory stations.

### BRIEF DESCRIPTION OF THE DRAWINGS

In the following, an embodiment of the invention will be described in detail with reference to the drawings. Throughout the drawings, the same elements will be denoted by the same reference numerals.
- Fig. 1: shows a laboratory centrifuge system according to the invention comprising a laboratory centrifuge and a transportation track, wherein in Fig. 1 a rotation reception of the laboratory centrifuge is in a transfer position,
- Fig. 2: shows the laboratory centrifuge system of Fig. 1, wherein the rotation reception is in a rotation position,
- Fig. 3: shows the laboratory centrifuge system of Fig. 1, wherein the rotation reception is rotating,
- Fig. 4: shows the laboratory centrifuge system, wherein in Fig. 4 the transportation track is in a transfer position,
- Fig. 5: shows the laboratory centrifuge system of Fig. 2, wherein the transportation track is in a rotation position,
- Fig. 6: shows the laboratory centrifuge system,
- Fig.7: shows a sample container carrier of the laboratory centrifuge system comprising a magnetically active element,
- Fig.8: shows a sample container carrier of the laboratory centrifuge system comprising at least one wheel and a drive motor,
- Fig. 9: shows a transfer mechanism of the laboratory centrifuge system,
- Fig. 10: shows the laboratory centrifuge system,
- Fig. 11: shows a side view of sample container carriers of the laboratory centrifuge system in form of single container carriers,
- Fig. 12: shows sample container carriers in form of rack container carriers,
- Fig. 13: shows a top view of the sample container carriers of Fig. 12 and
- Fig. 14: shows the laboratory centrifuge system comprising a plurality of laboratory centrifuges.

### DETAILED DESCRIPTION OF EMBODIMENTS OF THE INVENTION

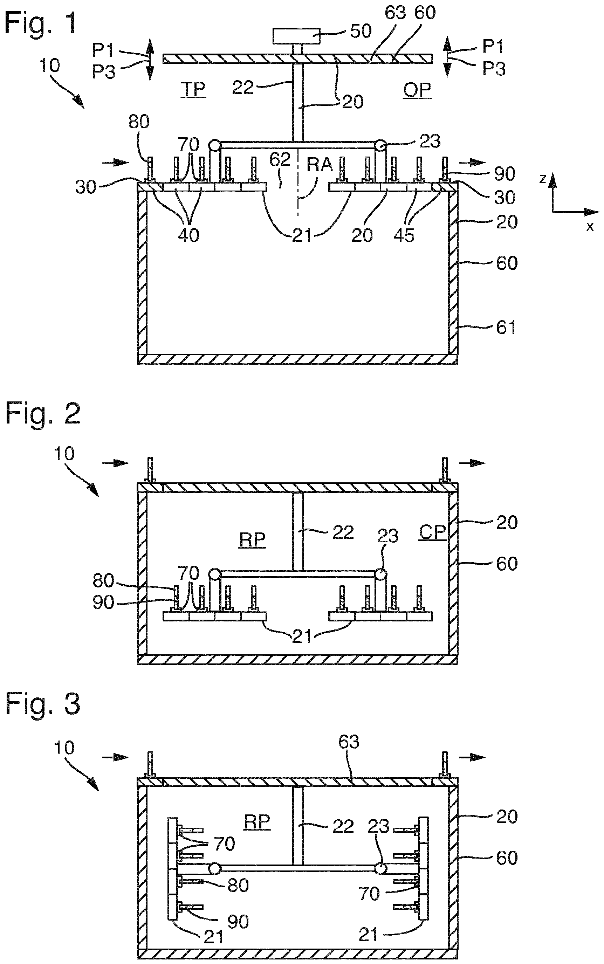

Fig. 1 to 14 show an inventive laboratory centrifuge system 10. The laboratory centrifuge system 10 comprises a laboratory centrifuge 20, a transportation track 30 and a transfer mechanism 40. The laboratory centrifuge 20 comprises at least one rotation reception 21. The rotation reception 21 is adapted to support at least one sample container carrier 70 carrying at least one laboratory sample container 80 containing a laboratory sample 90. Furthermore, the rotation reception 21 is adapted to rotate for centrifuging the laboratory sample 90. The transportation track 30 is adapted to support the sample container carrier 70. The transfer mechanism 40 is adapted to transfer the sample container carrier 70 from the transportation track 30 to the rotation reception 21 and/or from the rotation reception 21 to the transportation track 30. The transportation track 30 and/or the rotation reception 21 are/is adapted to be arranged in a transfer position TP to support the sample container carrier 70 during the whole transfer by the transfer mechanism 40.

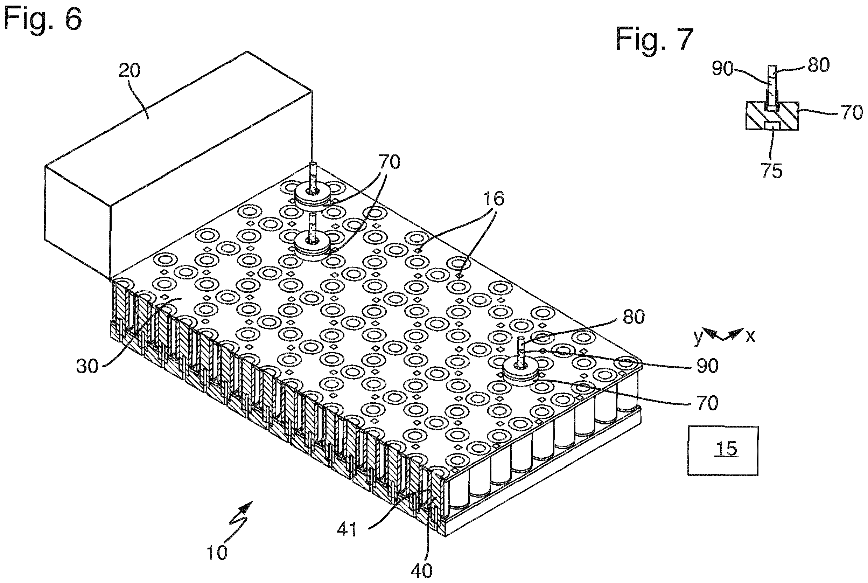

Additionally the laboratory centrifuge system 10 comprises a control device 15, as shown in Fig. 6. The control device 15 is configured to control the rotation reception 21, the transportation track 30 and the transfer mechanism 40.

Moreover, the laboratory centrifuge system 10 comprises the sample container carrier 70. In particular the laboratory centrifuge system 10 comprises a plurality of sample container carriers 70 (e.g. 2 to 1000).

The laboratory sample container 80 is designed as a tube and has an opening at an upper or top, respectively, end. In the shown embodiment the laboratory sample container 80 is open. Further the laboratory sample container 80 is made of glass or transparent plastic.

The sample container carrier 70 is embodied to carry the laboratory sample container 80. In alternative embodiments the sample container carrier and the laboratory sample container may be embodied as one-piece.

In detail the transportation track 30 extends in at least one dimension x, y, such that the sample container carrier 70 can move on the transportation track 30 towards and/or away from the rotation reception 21, as shown in Fig. 1 to 6, 9, 10, 12, and 14. In particular the transportation track 30 is embodied as a plane. In the shown embodiments the plane 30 is embodied, such that the sample container carrier 70 can stand on the plane 30.

Furthermore, the rotation reception 21 is embodied as a tray. In the shown embodiments the tray 21 is embodied, such that the sample container carrier 70 can stand on the tray 21.

Moreover, the transportation track 30 and/or the rotation reception 21 are/is adapted to be arranged between the transfer position TP and a rotation position RP.

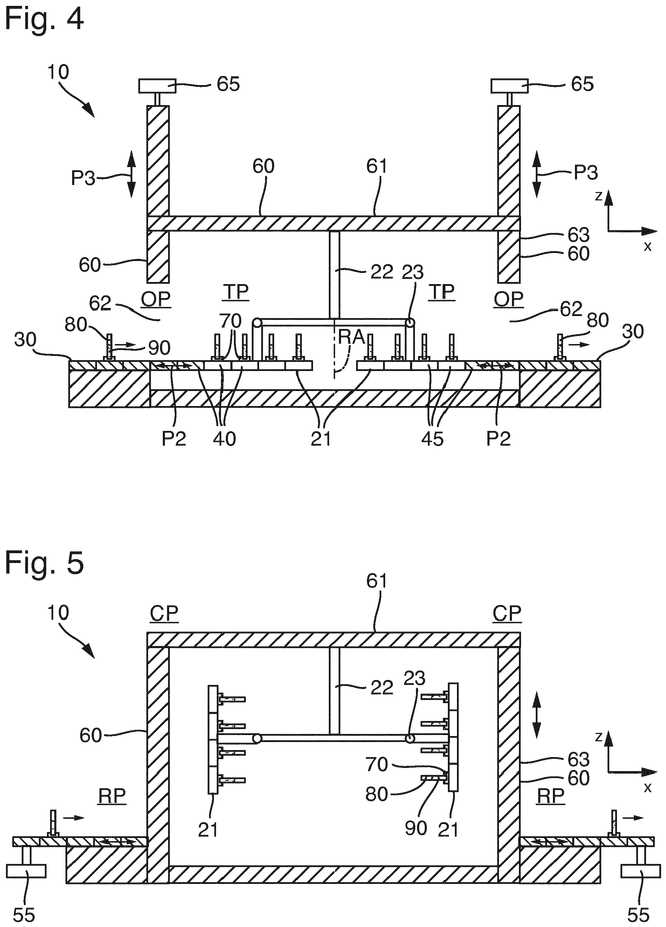

In the transfer position TP the transportation track 30 and the rotation reception 21 are proximal arranged to each other, in particular in direct contact, as shown in Fig. 1 and 4. In detail in the transfer position TP the transportation track 30 and the rotation reception 21 are connected or docked, respectively, with each other, in particular magnetically. Further, in the transfer position TP the transportation track 30 and the rotation reception 21 are arranged on a common horizontal level.

In the rotation position RP the transportation track 30 and the rotation reception 21 are distal arranged to each other, as shown in Fig. 2, 3 and 5. In particular in the rotation position RP a gap is present in between the transportation track 30 and the rotation reception 21. In other words: in the rotation position RP the transportation track 30 and the rotation reception 21 are disconnected.

In the rotation position RP the rotation reception 21 is adapted to swing outwards, in particular during the rotation.

In detail the laboratory centrifuge 20 comprises a rotor 22. The rotor 22 is adapted to rotate the rotation reception 21. The rotation reception 21 is attached to the rotor 22 by a hinge 23. In particular the control device 15 is configured to control the rotor 22.

In Fig. 1 to 3 the rotation reception 21 is adapted to be arranged between the transfer position TP and the rotation position RP, as shown by arrows P1. The laboratory centrifuge system 10 comprises a vertical mover 50. The vertical mover 50 is adapted to vertically move the rotation reception 21 between the transfer position TP and the rotation position RP. In alternative embodiments the vertical mover may be adapted to vertically move the transportation track between the transfer position and the rotation position. In particular the control device 15 is configured to control the vertical mover 50.

In Fig. 4 and 5 the transportation track 30 is adapted to be arranged between the transfer position TP and the rotation position RP, as shown by arrows P2. The laboratory centrifuge system 10 comprises a horizontal mover 55. The horizontal mover 55 is adapted to horizontally move the transportation track 30 between the transfer position TP and the rotation position RP. In alternative embodiments the horizontal mover may be adapted to horizontally move the rotation reception between the transfer position and the rotation position. In particular the control device 15 is configured to control the horizontal mover 55.

Further, the laboratory centrifuge system 10 comprises a housing 60 and a housing mover 50, 65. The housing 60 is adapted to house the rotation reception 21, in particular in the rotation position RP. The housing mover 50, 65 is adapted to move at least a part 63 of the housing 60 between a closed position CP and an open position OP, as shown by arrows P3. In the closed position CP the part 63 is arranged in between the transportation track 30 and the rotation reception 21. In the open position OP the part 63 is removed from in between the transportation track 30 and the rotation reception 21.

In detail the housing 60 comprises a main part 61 having at least one access opening 62 and at least one access part or door 63, respectively. In the closed position CP the access part 63 closes or covers the opening 62. In the open position OP the access part 63 opens or uncovers the opening 62.

In Fig. 1 to 3 the, in particular only one, access opening 62 is arranged or located at an upper or top, respectively, end of the main part 61. The housing mover 50 is a vertical housing mover. In alternative embodiments the housing mover may be a horizontal housing mover. In the shown embodiment in the closed position CP the access part 63 is arranged in the opening 62. In the open position OP the access part 63 is arranged above the opening 62. The access part 63 may also be denoted as cover or lid.

In detail the housing mover 50 and the vertical mover 50 are identical. The access part 63 is arranged above the rotation reception 21. In other words: the rotor 22 with the rotation reception 21 is attached to the access part 63. Furthermore, the access part 63 is attached to the vertical mover 50. In the closed position CP of the housing 60 the rotation reception 21 is in the rotation position RP. In the open position OP of the housing 60 the rotation reception 21 is in the transfer position TP.

In Fig. 4 and 5 the main part 61 of the housing 60 has two access openings 62 at lateral sides. The housing mover 65 is a vertical housing mover. In alternative embodiments the housing mover may be a horizontal housing mover. In the shown embodiment the housing 60 comprises two access parts or lateral side walls 63, respectively. In the closed position CP the access parts 63 are arranged in their corresponding openings 62. In the open position OP the access parts 63 are arranged above their corresponding openings 62.

In detail the housing mover 65 and the horizontal mover 55 are embodied different from each other. For the transfer firstly the housing mover 65 moves the access part 63 from the closed position CP into the open position OP. Secondly the horizontal mover 55 moves the transportation track 30 from the rotation position RP into the transfer position TP. For the rotation firstly the horizontal mover 55 moves the transportation track 30 from the transfer position TP into the rotation position RP. Secondly the housing mover 65 moves the access part 63 from the open position OP into the closed position CP.

In particular the control device 15 is configured to control the housing mover 65.

Furthermore, the rotation reception 21 has a rotation axis RA. The transfer mechanism 40 is adapted to transfer the sample container carrier 70 in a direction x, y being not parallel to the rotation axis RA, in particular being perpendicular to the rotation axis RA.

In the shown embodiment the rotation axis RA runs vertically. The sample container carrier 70 is transferred laterally. In particular in the open position OP the at least one access part 63 and the at least one access opening 62 are arranged, such that the lateral transfer is enabled.

In Fig. 1 to 7 the transfer mechanism 40 comprises a number of electro-magnetic actuators 45. The number of electro-magnetic actuators 45 is adapted to apply a magnetic move force to the sample container carrier 70 to move the sample container carrier 70 from the transportation track 30 to the rotation reception 21 and/or from the rotation reception 21 to the transportation track 30. In particular the control device 15 is configured to control the number of electro-magnetic actuators 45. In the shown embodiment the transfer mechanism 40 comprises a plurality of electro-magnetic actuators 45 (e.g. 2 to 10000).

Additionally the transfer mechanism 40 comprises at least one magnetically active element 75. The at least one magnetically active element 75 is comprised by the sample container carrier 70, as shown in Fig. 7.

In the shown embodiment the magnetically active element 75 is a permanent magnet. The number of electro-magnetic actuators 45 is adapted to generate a magnetic field. The magnetically active element 75 is adapted to interact with the magnetic field generated by the number of electro-magnetic actuators 45, such that the magnetic move force is applied to the sample container carrier 70. The number of electro-magnetic actuators 45 is implemented as a number of solenoids each having a solid ferromagnetic core, as shown in Fig. 6. Furthermore, the number of electro-magnetic actuators 45 can be driven individually, in particular by the control device 15, in order to generate the magnetic field.

In detail the number of electro-magnetic actuators 45 is, in particular stationary, arranged below the transportation track 30 and/or the rotation reception 21.

During the rotation the sample container carrier 70 is hold on the rotation reception 21 by the number of electro-magnetic actuators 45 arranged below the rotation reception 21. Additionally for the rotation the centrifuge 20 and its rotor 22, respectively, are balanced by using, in particular, at least one magnetic weight, in particular supported by the rotation reception 21.

The electro-magnetic actuators 45 are at least in some areas or regions quadratically arranged in a grid having rows and columns, in particular in a plane parallel to the transportation track 30 and/or the rotation reception 21. In each center of a quadrat formed by corresponding electro-magnetic actuators 45 no electro-magnetic actuator is arranged. In other words: in each second row in each second position there is no electro-magnetic actuator 45.

Furthermore, the laboratory centrifuge system 10 comprises a number, in particular a plurality, of Hall-sensors 16. The number of Hall-sensors 16 is arranged, such that a position of the sample container carrier 70 on the transportation track 30 and/or the rotation reception 21 can be sensed. The control device 15 is functionally coupled to the Hall-sensors 16 for sensing the position of the sample container carrier 70. The control device 15 is configured to control the number of electro-magnetic actuators 45 in response to the sensed position.

Moreover, the sample container carrier 70 can be translationally moved in at least one dimension x, y on or over the transportation track 30 and/or the rotation reception 21. In detail the sample container carrier 70 comprises a sliding surface, wherein the sliding surface is adapted to be in direct contact with the transportation track 30 and/or the rotation reception 21 and enables performing movements, in particular slides, of the sample container carrier 70 on the transportation track 30 and/or the rotation reception 21.

Further, the sample container carrier 70 may move on the transportation track 30 and/or the rotation reception 21 along an individual transport path.

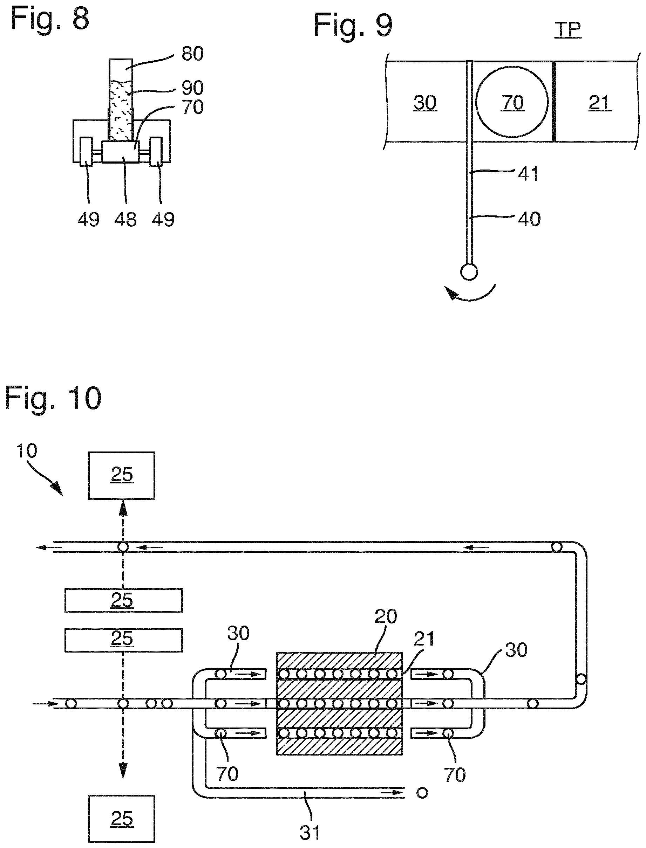

In Fig. 8 the transfer mechanism 40 comprises at least one wheel 49, in particular two wheels 49, and a drive motor 48 to drive the wheel/s 49, in particular independent from each other. The drive motor 48 and the wheel 49 are adapted to move the sample container carrier 70 from the transportation track 30 to the rotation reception 21 and/or from the rotation reception 21 to the transportation track 30. In particular the control device 15 is configured to control the drive motor 48 and the wheel 49.

In detail the sample container carrier 70 comprises the drive motor 48 and the wheel 49. The wheel 49 is adapted to be in direct contact with the transportation track 30 and/or the rotation reception 21 and enables performing movements of the sample container carrier 70 on the transportation track 30 and/or the rotation reception 21. In alternative embodiments the drive motor and the wheel may be, in particular stationary, arranged above the transportation track and/or the rotation reception. The wheel may be adapted to be in direct contact with the sample container carrier.

In the shown embodiment the drive motor 48 is an electric motor.

In Fig. 9 the transfer mechanism 40 comprises a pusher 41. The pusher 41 is adapted to push the sample container carrier 70 from the transportation track 30 to the rotation reception 21. In alternative embodiments the pusher may be adapted to push the sample container carrier from the rotation reception to the transportation track. In particular the control device 15 is configured to control the pusher 41.

In detail the pusher 41 is adapted to be in direct contact with the sample container carrier 70. In the shown embodiment the pusher 41 comprises an arm. The arm is adapted to push at a lateral side of the sample container carrier 70. In particular a rotational movement of the arm causes a translational movement of the sample container carrier 70.

In alternative embodiments it may be sufficient, if the transfer mechanism either comprises the number of electro-magnetic actuators and the magnetically active element or the at least one wheel and the drive motor or the pusher.

In Fig. 1 to 5, 10 and 12 to 14 the sample container carrier 70 is transferred by the transfer mechanism 40 at a first, in particular a left, side of the laboratory centrifuge 20 from the transportation track 30 to the rotation reception 21, as shown by arrows. Then the laboratory sample 90 contained by the laboratory sample container 80 carried by the sample container carrier 70 is centrifuged by the laboratory centrifuge 20. In other words: the laboratory sample container 80 is centrifuged with or in or carried by its sample container carrier 70. The laboratory sample container 80 does not have to be removed from the sample container carrier 70 for centrifugation. Then the sample container carrier 70 is transferred by the transfer mechanism 40 at a second opposite, in particular a right, side of the laboratory centrifuge 20 from the rotation reception 21 to the transportation track 30, as shown by arrows. In alternative embodiments the sample container carrier may be transferred by the transfer mechanism at the same side of the laboratory centrifuge from the rotation reception to the transportation track. During the whole transfer the sample container carrier 70 is supported either by the transportation track 30 or the rotation reception 21 or both of them.

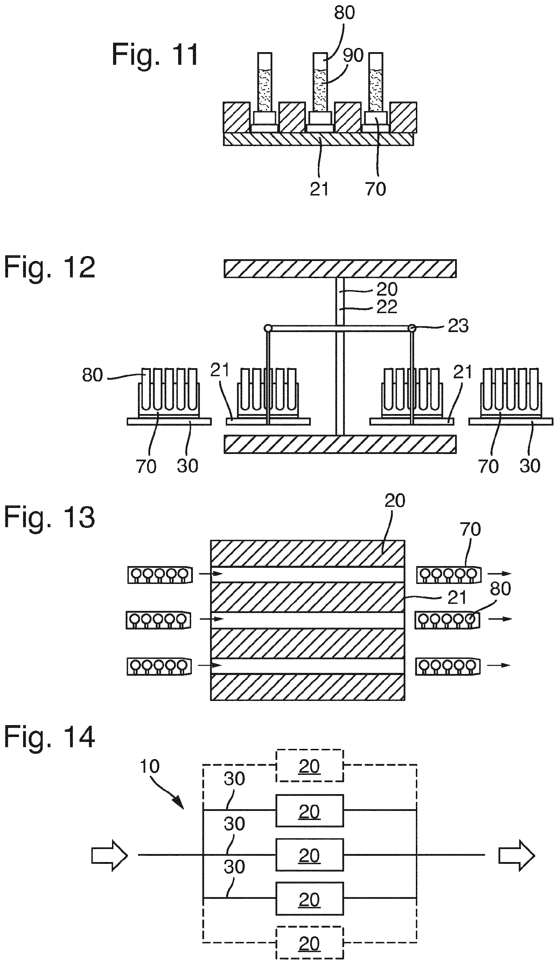

Self-evidently, more than the two rotation receptions 21 shown in Fig. 1 to 5 may be comprised in the laboratory centrifuge 20. Furthermore, the rotation reception 21 may be adapted to support more than the four sample container carriers 70 shown in Fig. 1 to 5. Moreover, the sample container carrier 70 in Fig. 1 to 5 and 7 to 11 is adapted to carry only one laboratory sample container 80. The sample container carrier 70 may also be denoted as single container carrier. In Fig. 12 and 13 the sample container carrier 70 is adapted to carry five laboratory sample containers 80. The sample container carrier 70 may also be denoted as rack container carrier. In alternative embodiments the sample container carrier may be adapted to carry two, three, four or more than five laboratory sample containers. Further, the transportation track is adapted to support a plurality of sample container carriers 70.

Furthermore, in Fig. 1 to 6, 10, 12 and 13 the laboratory centrifuge system 10 comprises only one laboratory centrifuge 20. In Fig. 14 the laboratory centrifuge system 10 comprises three laboratory centrifuges 20. In alternative embodiments the laboratory centrifuge system may comprise two or more than three laboratory centrifuges. In Fig. 14 the plurality of laboratory centrifuges is arranged horizontally besides each other. In alternative embodiments additionally or alternatively the plurality of laboratory centrifuges may be arranged vertically above each other. In the shown embodiment the plurality of laboratory centrifuges 20 is arranged in parallel, in particular to increase throughput and flexibility. Each laboratory centrifuge 20 can be designed/programmed individually, for example centrifugation force, centrifugation time, temperature, different container/rack sizes.

The laboratory centrifuge system 10 may also be denoted as laboratory automation system. In addition to the laboratory centrifuge 20 the laboratory automation system 10 comprises a number of laboratory stations 25, as shown in Fig. 10. The laboratory centrifuge 20 may also be denoted as laboratory station. The transfer mechanism 40 is adapted to move the sample container carrier 70 and/or the laboratory sample container 80 and/or the laboratory sample 90 between the laboratory stations 20, 25, in particular on the transportation track 30.

In Fig. 10 the laboratory station 25 before the laboratory centrifuge 20 is a tube type identification and status station, in particular for setting and balancing the laboratory centrifuge 20. The laboratory station 25 after the laboratory centrifuge 20 is a sample quality determining station. In the shown embodiment the laboratory stations 25 share one camera module for both detections.

Additionally the laboratory centrifuge system 10 comprises a bypass 31 for laboratory samples 90, which do not need centrifugation.

As the shown and above discussed embodiments reveal, the invention provides a laboratory centrifuge system comprising a laboratory centrifuge, wherein the laboratory centrifuge system enables a transfer of a laboratory sample container to and/or from the centrifuge in an improved manner, in particular in a time-saving manner.

## Claims

1. Laboratory centrifuge system (10), comprising:
- a laboratory centrifuge (20), wherein the laboratory centrifuge (20) comprises at least one rotation reception (21), wherein the rotation reception (21) is adapted to support at least one sample container carrier (70) carrying at least one laboratory sample container (80) containing a laboratory sample (90) and to rotate for centrifuging the laboratory sample (90),
- a transportation track (30), wherein the transportation track (30) is adapted to support the sample container carrier (70), and
- a transfer mechanism (40), wherein the transfer mechanism (40) is adapted to transfer the sample container carrier (70) from the transportation track (30) to the rotation reception (21) and/or from the rotation reception (21) to the transportation track (30),
- wherein the transportation track (30) and/or the rotation reception (21) are/is adapted to be arranged in a transfer position (TP) to support the sample container carrier (70) during the whole transfer by the transfer mechanism (40).

2. Laboratory centrifuge system (10) according to claim 1,
- wherein the transportation track (30) and/or the rotation reception (21) are/is adapted to be arranged between the transfer position (TP), wherein in the transfer position (TP) the transportation track (30) and the rotation reception (21) are proximal arranged to each other, and a rotation position (RP), wherein in the rotation position (RP) the transportation track (30) and the rotation reception (21) are distal arranged to each other.

3. Laboratory centrifuge system (10) according to claim 2,
- wherein in the rotation position (RP) the rotation reception (21) is adapted to swing outwards.

4. Laboratory centrifuge system (10) according to claim 3,
- wherein the laboratory centrifuge (20) comprises a rotor (22), wherein the rotor (22) is adapted to rotate the rotation reception (21) and wherein the rotation reception (21) is attached to the rotor (22) by a hinge (23).

5. Laboratory centrifuge system (10) according to any one of claims 2 to 4, comprising:
- a vertical mover (50), wherein the vertical mover (50) is adapted to vertically move the rotation reception (21) and/or the transportation track between the transfer position (TP) and the rotation position (RP), and/or
- a horizontal mover (55), wherein the horizontal mover (55) is adapted to horizontally move the transportation track (30) and/or the rotation reception (21) between the transfer position (TP) and the rotation position (RP).

6. Laboratory centrifuge system (10) according to any one of the preceding claims, comprising:
- a housing (60), wherein the housing (60) is adapted to house the rotation reception (21), and
- a housing mover (50, 65), wherein the housing mover (50, 65) is adapted to move at least a part (63) of the housing (60) between a closed position (CP), wherein in the closed position (CP) the part (63) is arranged in between the transportation track (30) and the rotation reception (21), and an open position (OP), wherein in the open position (OP) the part (63) is removed from in between the transportation track (30) and the rotation reception (21).

7. Laboratory centrifuge system (10) according to any one of the preceding claims,
- wherein the rotation reception (21) has a rotation axis (RA), and
- wherein the transfer mechanism (40) is adapted to transfer the sample container carrier (70) in a direction (x, y) being not parallel to the rotation axis (RA), in particular being perpendicular to the rotation axis (RA).

8. Laboratory centrifuge system (10) according to any one of the preceding claims,
- wherein the transportation track (30) extends in at least one dimension (x, y), such that the sample container carrier (70) can move on the transportation track (30) towards and/or away from the rotation reception (21).

9. Laboratory centrifuge system (10) according to any one of the preceding claims,
- wherein the transportation track (30) is embodied as a plane.

10. Laboratory centrifuge system (10) according to any one of the preceding claims,
- wherein the rotation reception (21) is embodied as a tray.

11. Laboratory centrifuge system (10) according to any one of the preceding claims,
- wherein the transfer mechanism (40) comprises a pusher (41), wherein the pusher (41) is adapted to push the sample container carrier (70) from the transportation track (30) to the rotation reception (21) and/or from the rotation reception to the transportation track.

12. Laboratory centrifuge system (10) according to any one of the preceding claims,
- wherein the transfer mechanism (40) comprises a number of electro-magnetic actuators (45), wherein the number of electro-magnetic actuators (45) is adapted to apply a magnetic move force to the sample container carrier (70) to move the sample container carrier (70) from the transportation track (30) to the rotation reception (21) and/or from the rotation reception (21) to the transportation track (30).

13. Laboratory centrifuge system (10) according to any one of the preceding claims, comprising:
- the sample container carrier (70).

14. Laboratory centrifuge system (10) according to claim 13,
- wherein the transfer mechanism (40) comprises at least one magnetically active element (75), wherein the at least one magnetically active element (75) is comprised by the sample container carrier (70).

15. Laboratory centrifuge system (10) according to any one of the preceding claims,
- wherein the transfer mechanism (40) comprises at least one wheel (49) and a drive motor (48) to drive the wheel (49), wherein the drive motor (48) and the wheel (49) are adapted to move the sample container carrier (70) from the transportation track (30) to the rotation reception (121) and/or from the rotation reception (121) to the transportation track (30).
